# EUROPÄISCHE PATENTSCHRIFT

(11) **EP 0 437 733 B1**
(45) Veröffentlichungstag und Bekanntmachung des Hinweises auf die Patenterteilung: **11.08.1993**
(21) Anmeldenummer: 90123908.7
(22) Anmeldetag: 12.12.1990
(51) Int. Cl.: B08B 9/06

(54) **Vorrichtung zum Reinigen und Entleeren von Flüssigkeitsleitungen, insbesondere Getränkeleitungen in Zapfanlagen**
Cleaning and emptying system for fluid conduits, especially for beverage conduits in tapping installations
Dispositif de nettoyage et de vidange des conduits de fluide, spécialement des conduits de boissons dans des installations de soutirage

(30) Priorität: 23.12.1989 DE 3942788
(43) Veröffentlichungstag der Anmeldung: 24.07.1991
(73) Patentinhaber: Till, Rudolf, D-76547 Sinzheim (DE)
(72) Erfinder: Till, Rudolf, D-76547 Sinzheim (DE)
(74) Vertreter: Zipse + Habersack

(56) Entgegenhaltungen:
- DE-A- 2 003 569
- DE-A- 3 322 908
- DE-A- 3 504 636
- DE-C- 318 557

## Beschreibung

Die Erfindung betrifft eine Vorrichtung zum Reinigen und Entleeren von Flüssigkeitsleitungen, insbesondere Getränkeleitungen in Zapfanlagen, mit einem Schieber- oder Drehschieberventil, bei dem der Ventilschieber in einer Aussparung eines Ventilgehäuses derart beweglich ist, daß mindestens eine Querbohrung im Ventilschieber in Verbindung mit einem Anschlußstutzen für den Einlauf des Getränkes gebracht werden kann, und mit einem zylinderförmigen Magazin für elastische, kugelförmige Reinigungskörper sowie einem Anschlußstutzen für die Wasserzufuhr.

Die Erfindung geht aus von einer Reinigungsvorrichtung, wie sie in der DE-OS 35 04 636 beschrieben ist. Bei dieser ser Reinigungsvorrichtung sind in der Oberwand und in der Unterwand des Ventilgehäuses ein Anschlußstutzen für die zum Zapfhahn führende Getränkeleitung und ein Anschlußstutzen für die zum Faß führende Getränkeleitung vorgesehen. Ferner ist je ein Gewindeanschluß für die Zu- und Abfuhr des Wassers vorgesehen. Ein Magazin für kugelförmige, elastische Reinigungskörper ist an der Oberwand des Ventilgehäuses befestigt. Der Ventilschieber ist zweiteilig aufgebaut und weist einen um seine Längsachse drehbaren Schaltkörper auf, der mit einer zentralen, bis in eine Endkugel reichende Zentralbohrung versehen ist.

Mit der vorbekannten Vorrichtung soll abwechselnd die zum Faß und die zum Zapfhahn führende Getränkeleitung gereinigt werden, wobei bei Betriebs- oder Zapfstellung keine Beunruhigung des Getränkes verursacht wird.

Die vorbekannte Vorrichtung ist verhältnismäßig kompliziert aufgebaut und kann nur an Ort und Stelle mittels eines Schieb- und Drehschalthebels betätigt werden. Außerdem kann die Reinigung der zum Faß und der zum Zapfhahn führenden Getränkeleitung nur abwechselnd erfolgen.

Der vorliegenden Erfindung liegt die Aufgabe zugrunde, die vorbekannte Reinigungsvorrichtung im Hinblick auf den Aufbau und den Betriebsablauf zwischen Zapfbetrieb und Reinigungsbetrieb wesentlich zu vereinfachen.

Diese Aufgabe wird gemäß der Erfindung dadurch gelöst, daß das zylinderförmige Magazin für die elastischen, kugelförmigen Reinigungskörper und der zu einer flexiblen Getränkeleitung zum Ausschank führende Anschlußstutzen unmittelbar an der Oberseite des durch eine geeignete Antriebseinrichtung betätigbaren Ventilschiebers über je einer entsprechenden Durchbohrung derselben angeordnet und mit diesem verschiebbar sind, wobei der Gewindeanschluß für die Reinigungswasserzufuhr und der Anschluß für die Getränkezufuhr im unteren Teil des Ventilgehäuses im Abstand voneinander angeordnet sind, derart, daß in der einen Endstellung des Schiebers im Betriebszustand die beiden Durchbohrungen zur Deckung mit den beiden Anschlußstutzen im unteren Teil des Ventilgehäuses gebracht werden und im Reinigungs- bzw. Entleerungszustand der Anschluß für die Getränkezufuhr geschlossen und die zum Ausschank führende Getränkeleitung mit dem Gewindeanschluß für die Reinigungswasserzufuhr verbunden ist.

Gemäß dem Merkmal des Patentanspruches 2 weisen der Gewindeanschluß und der Anschluß für die Getränkezufuhr im unteren Teil des Ventilgehäuses den gleichen Abstand voneinander wie die beiden Durchgangsbohrungen im Ventilschieber auf.

Gemäß dem Merkmal des Anspruches 3 weisen der Gewindeanschluß und der Anschluß für die Getränkezufuhr im unteren Teil des Ventilgehäuses einen größeren Abstand voneinander wie die beiden Durchgangsbohrungen im Ventilschieber auf.

Gemäß dem Merkmal des Patentanspruches 4 ist im oberen Teil des Gewindeanschlusses für die Reinigungswasserzufuhr ein Raum zur Aufnahme eines kugelförmigen, elastischen Reinigungskörpers vorgesehen, der vom rohrförmigen Magazin bei der Stellung des Betriebszustandes in diesen Raum fällt und in der Stellung des Reinigungszustandes von der Wassersäule durch die zum Ausschank führende Getränkeleitung gedrückt wird.

Mit der Reinigungsvorrichtung gemäß der Erfindung wird der wesentliche Vorteil erreicht, daß mit einem gegenüber der durch die DE-OS 35 04 636 vorbekannten Vorrichtung wesentlich einfacheren Schieber- oder Drehschieberventil der Reinigungs- und Entleerungsvorgang in der zum Ausschank führenden Getränkeleitung durchgeführt werden kann. Durch den besonders einfachen Aufbau ist es auch möglich, die Vorrichtung gemäß der Erfindung unmittelbar auf den Getränkebehälter, beispielsweise ein Bierfaß, aufzusetzen, so daß zwischen dem Bierfaß und der Vorrichtung gemäß der Erfindung eine besondere Zuleitung wegfallen kann.

Ein weiterer Vorteil der erfindungsgemäßen Vorrichtung besteht darin, daß die Reinigung der zum Ausschank führenden Getränkeleitung ohne Getränkeverlust durchgeführt werden kann, da das in der Leitung stehende Getränk bei Einleitung des Reinigungsvorganges bis zum Erscheinen des Reinigungskörpers noch voll verwendbar ist.

Durch die besondere Anordnung des Magazins für die Reinigungskörper unmittelbar auf dem Schieber des Schieber- oder Drehschieberventils wird das Problem der Dichtung von beweglichen Teilen nur zwischen den Anschlüssen im unteren Teil des Ventilgehäuses und dem Schieber auftreten. Diese Lösung ist deshalb besonders vorteilhaft, weil mit dem Schieber oder Drehschieber unmittelbar eine flexible Getränkeleitung, die zum Ausschank führt, verbunden wird. Selbstverständlich kann diese flexible Leitung auch nur aus einem Teil einer Gesamtleitung bestehen, wobei die Flexibilität dieser Leitung nur in bezug auf den Schieberweg des Schieberventils berücksichtigt werden muß.

Gemäß Anspruch 5 besteht die Antriebseinrichtung zur Betätigung des Ventilschiebers aus einem gegebenenfalls fernsteuerbaren Druckkolben, der von einer CO₂-Druckflasche, die beispielsweise beim Zapfen von Bier benötigt wird, beaufschlagt wird.

Gemäß Anspruch 6 kann der Schieber zur Längsbewegung im Ventilgehäuse ein Querschnittsprofil, beispielsweise ein Schwalbenschwanzprofil, aufweisen, um eine Führung in einer entsprechenden Nut innerhalb des Ventilgehäuses zu gewährleisten.

Die Anschlußstutzen im unteren Teil des Ventilgehäuses können mit federbelasteten, zylindrischen Einsätzen zur Abdichtung gegen die untere Fläche des Schiebers versehen werden.

Schließlich kann die gesamte Vorrichtung gemäß der Erfindung gemäß Anspruch 8 mit einem Anschlußstutzen für die Getränkezufuhr versehen werden, der ein Ansatzstück zum direkten Aufsetzen auf ein Getränkefaß aufweist.

Anhand der Zeichnungen soll am Beispiel bevorzugter Ausführungsformen die Vorrichtung gemäß der Erfindung näher erläutert werden.

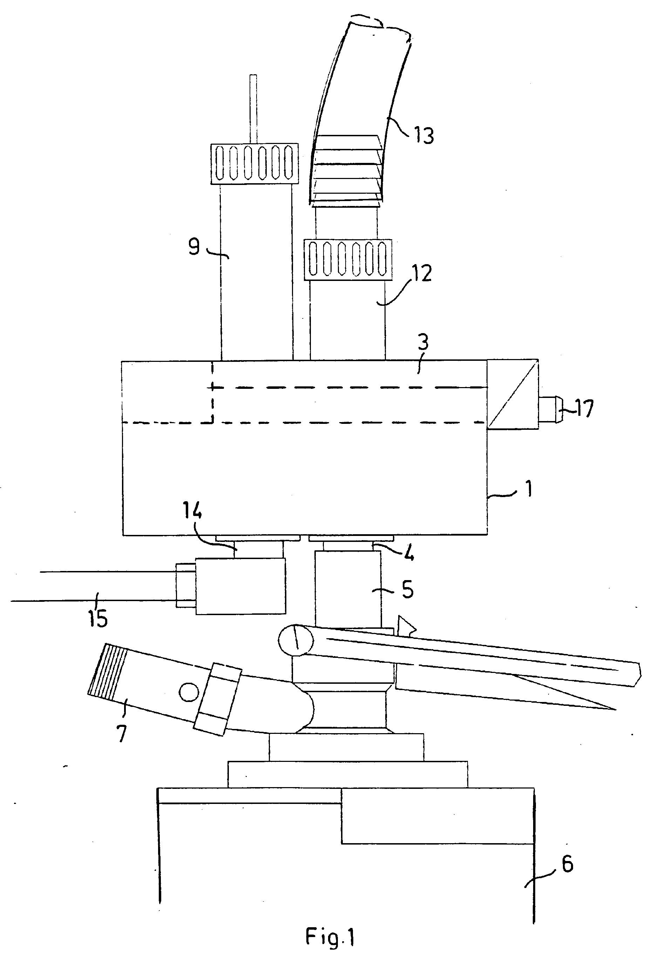

In den Zeichnungen zeigt
- Fig. 1: eine prizipielle Seitenansicht einer Vorrichtung gemäß der Erfindung.
- Die Figuren 2 und 3: zeigen je einen Längs- und einen Querschnitt der Vorrichtung gemäß Fig. 1 im Betriebszustand, d. h. in der Schankstellung.
- Die Figuren 4 und 5: zeigen entsprechende Schnitte wie die Figuren 2 und 3 im Entleerungs- und Reinigungszustand.
- Fig. 6: zeigt einen Querschnitt durch eine Vorrichtung gemäß der Erfindung mit schwalbenschwanzförmigem Ventilschieber.
- Die Figuren 7 bis 9: zeigen eine abgewandelte Ausführungsform der Vorrichtung gemäß der Erfindung.

Wie sich aus den Figuren der Zeichnung ergibt, besteht die Vorrichtung gemäß der Erfindung aus einem als Block ausgebildeten Ventilgehäuse 1, in dem sich eine T-förmige Nut 2 zur Aufnahme eines entsprechend ausgebildeten, T-förmigen Ventilschiebers 3 befindet.

In der Unterseite des Ventilgehäuses 1 ist ein Anschluß 4 für die Getränkezufuhr vorgesehen, der unmittelbar auf ein Ansatzstück 5 eines Getränkebehälters 6, beispielsweise eines Bierfasses, aufgesetzt ist. Unterhalb des Anschlußstückes 5 ist ein Anschluß 7 für das CO₂ vorgesehen, das von einer nicht dargestellten CO₂-Flasche geliefert wird.

Unmittelbar an der Oberseite des Ventilschiebers 3 ist über einer Durchbohrung 8 im Schieber 3 ein zylinderförmiges Magazin 9 angeordnet, in dem sich elastische, kugelförmige Reinigungskörper 10, beispielsweise kleine Bällchen oder Schwämmchen, befinden. Im Abstand davon ist über einer weiteren Bohrung 11 im Ventilschieber 3 ein Anschlußstutzen 12 angeordnet, der mit einer flexiblen Getränkeleitung 13 verbunden ist, die zum Ausschank führt.

Im unteren Teil des Ventilgehäuses 1 ist ferner neben dem Anschluß 4 für die Getränkezufuhr ein Gewindeanschluß 14 für die Zuleitung 15 für das Reinigungswasser vorgesehen.

Um die Funktion der Vorrichtung gemäß der Erfindung zu gewährleisten, weisen der Gewindeanschluß 14 für die Reinigungswasserzufuhr und der Anschluß 4 für die Getränkezufuhr im unteren Teil des Ventilgehäuses 1 den gleichen Abstand wie die beiden Durchbohrungen 8 bzw. 11 im Ventilschieber voneinander auf.

Zur Betätigung des Ventilschiebers ist ferner eine Druckkolbenanordnung 16 im Ventilgehäuse 1 angeordnet, deren Anschluß 17 mit der nicht dargestellten CO₂-Flasche in Verbindung steht. Die Auslösung des Druckkolbens kann durch eine nicht dargestellte Fernsteuereinrichtung erfolgen, so daß die Vorrichtung innerhalb eines gewissen Radius von beliebiger Stelle aus bedient werden kann.

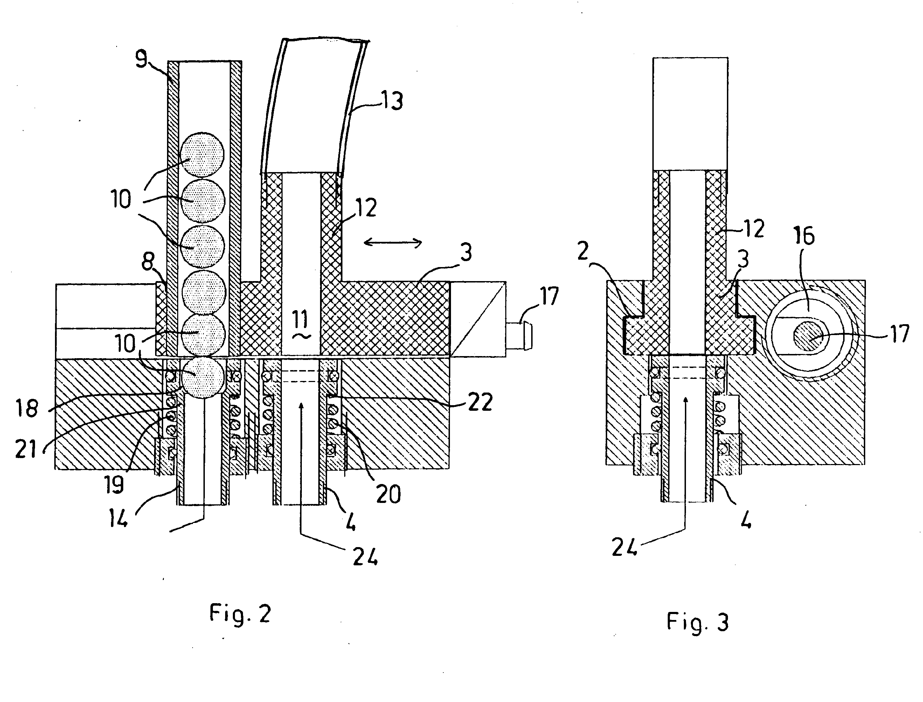

Wie sich insbesondere aus Fig. 2 ergibt, ist im oberen Teil des Anschlußstutzens 14 für die Reinigungswasserzufuhr ein Raum 18 zur Aufnahme eines kugelförmigen, elastischen Reinigungskörpers 10 vorgesehen, der vom rohrförmigen Magazin 9 in der nachfolgend noch beschriebenen Stellung des Betriebszustandes in diesen Raum fällt.

Die Anschlußstutzen 4 und 14 weisen ferner durch Schraubenfedern 19, 20 belastete, zylindrische Einsätze 21, 22 auf, die zur Abdichtung gegen die untere Fläche des Schiebers 3 drücken.

Die Funktion der Vorrichtung gemäß der Erfindung soll nun anhand der Figuren 2 bis 5 näher erläutert werden.

In den Figuren 2 und 3, welche die Betriebsstellung darstellen, befindet sich das Magazin 9 in Übereinstimmung mit dem Wasseranschluß 14, so daß durch Schwerkraft in den oberen Raum 18 ein Reinigungskörper 10 fällt. Die Bohrung 11 befindet sich in Übereinstimmung mit dem Anschluß 4, so daß, ausgehend vom Getränkebehälter 6, das Getränk in Richtung des Pfeiles 24 durch die flexible Leitung 13 zum Ausschank geführt wird.

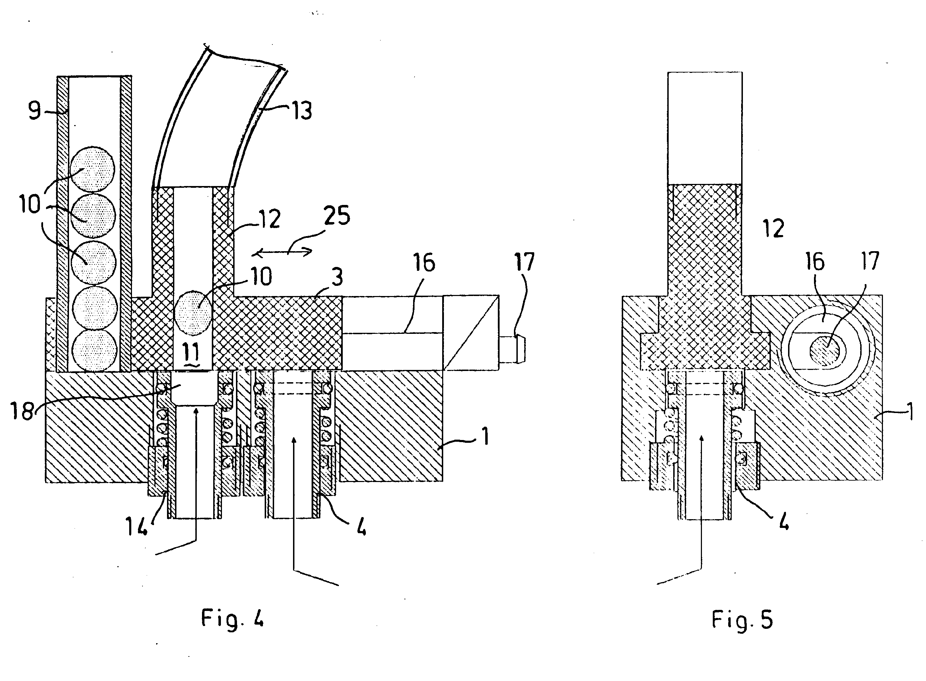

In den Figuren 4 und 5 ist der Reinigungs- bzw. Entleerungszustand dargestellt. Der Schieber 3 ist in Richtung des Doppelpfeils 25 nach links bewegt, so daß der Austritt des Magazins 9 durch die Grundfläche des Ventilgehäuses 1 geschlossen wird. Ferner wird der Anschluß 4 für die Getränkezufuhr durch die Grundfläche 23 des Schiebers 3 geschlossen.

Der Anschlußstutzen 12 mit der Durchbohrung 11 befindet sich in dieser Stellung über dem Anschluß 14 für die Wasserzufuhr. Durch den Druck der Wassersäule wird der Reinigungskörper 10 nach oben in die flexible Leitung 13 und von da bis zum Ausschank gedrückt. Die Grenze zwischen der aufsteigenden Wassersäule und der sich in der Leitung 13 befindlichen Getränkesäule bildet der kugelförmige, elastische Reinigungskörper 10.

Die den Schankhahn bedienende Person kann also das in der Getränkeleitung 13 stehende Getränk noch verwenden, und zwar so lange, bis der Reinigungskörper 10 aus dem Getränkehahn am Ausschank austritt. Wenn die noch vorhandene Getränkemenge vorbestimmt ist, weiß die ausschenkende Person genau, wieviel Getränk noch verabreicht werden kann. Dadurch arbeitet die Vorrichtung gemäß der Erfindung ohne Getränkeverlust.

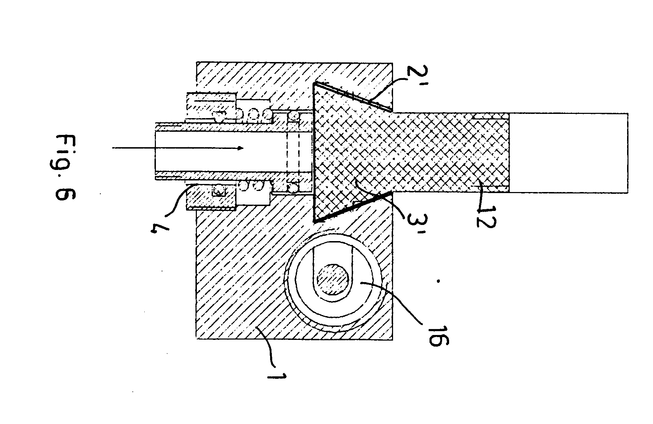

In Fig. 6 ist ein Schnitt durch eine andere Ausführungsform der Erfindung entsprechend Fig. 5 dargestellt. Der Schieber 3' ist dabei schwalbenschwanzförmig ausgebildet und läuft in einer entsprechenden, schwalbenschwanzförmig ausgebildeten Aussparung 2'. Selbstverständlich sind auch andere Ausbildungsformen des Schiebers möglich. Wesentlich ist dabei nur, daß er im Ventilgehäuse 1 eindeutig geführt wird.

Es ist auch möglich, den Schieber als Drehschieber auszubilden, wobei dann das Ventilgehäuse eine kreisrunde Form aufweist, in der sich die entsprechenden Anschlußstutzen befinden.

Die Vorrichtung gemäß der Erfindung ist nicht nur für eine Getränkeschankanlage, beispielsweise eine Bierschankanlage, vorgesehen, sondern sie kann vielmehr auch bei Anlagen für andere Flüssigkeiten und flüssige Lebensmittel, wie Milch, Milcherzeugnisse od. dgl., eingesetzt werden. Dieser Einsatz ist insbesondere bei der industriellen Herstellung und Aufbereitung der Flüssigkeiten und Lebensmittel, wie in Milchzentralen, bei Getränkeherstellern usw., gedacht.

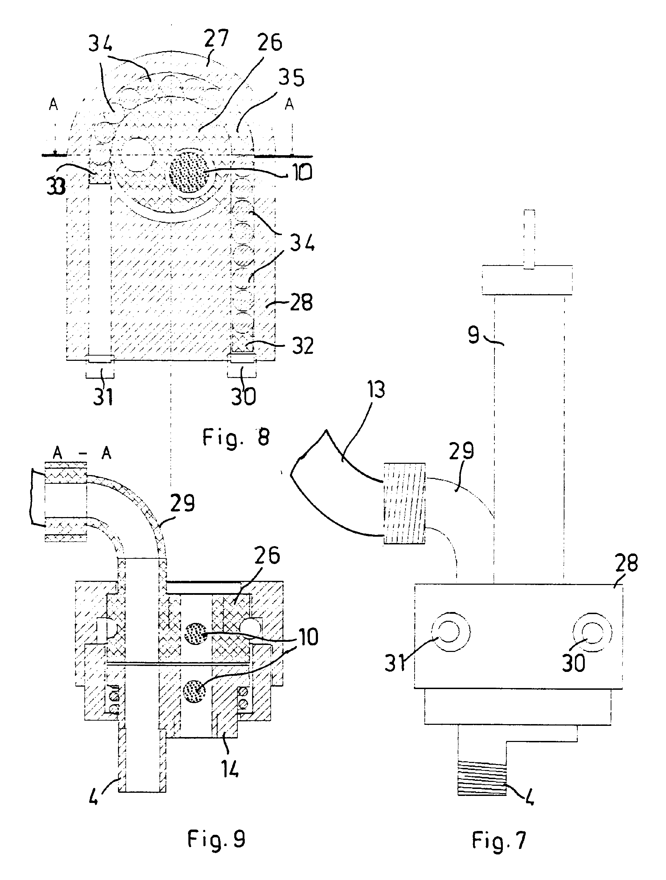

In den Figuren 7 bis 9 ist eine abgewandelte Ausführungsform der Vorrichtung gemäß der Erfindung unter Anwendung eines Drehschieberventils dargestellt.

Der Drehschieber 26 befindet sich dort innerhalb eines einen halbkreisförmigen Bereich 27 aufweisenden Ventilgehäuses 28. Der gebogene Anschlußstutzen 29 führt zur flexiblen Getränkeleitung zum Ausschank. Der Getränkeeinlaufstutzen 4 und der Stutzen 14 für die Reinigungswasserzufuhr sind im unteren Teil des Ventilgehäuses 28 angeordnet, wobei anstelle der Längsbewegung der Schieber 26 eine Drehbewegung ausführt, um entweder den Anschlußstutzen 4 mit dem gebogenen Anschlußstutzen 29 zu verbinden oder nach einer Drehbewegung den Anschluß für die Reinigungswasserzufuhr zusammen mit dem darin befindlichen Reinigungskörper 10 mit dem Anschlußstutzen 29 zu verbinden. Hierzu sind zwei Druckanschlüsse 30, 31 vorgesehen, hinter denen in geeigneten Führungen Druckkolben 32, 33 angeordnet sind. Die Druckkolben stehen mit Metallkugeln 34 in Verbindung, die gegen ein Teil 35 des Drehschiebers 26 anliegen. Je nachdem, welcher Druckkolben 32, 33 mit Druck beaufschlagt wird, wird das Teil 35 durch die Kugeln 34 in die entsprechende Endstellung gebracht. Damit wird auch die zuvor beschriebene Drehbewegung der Anschlußstutzen 4, 14 ausgelöst.

Es ist selbstverständlich auch möglich, in Abwandlung der in den Figuren 2 und 4 dargestellten Ausführungsform den Abstand des Gewindeanschlusses 14 für die Reinigungswasserzufuhr und des Anschlusses 4 für die Getränkezufuhr im unteren Teil des Ventilgehäuses größer zu machen als der Abstand der beiden Durchgangsbohrungen 8, 11 im Ventilschieber 3. Hierbei kommt es im wesentlichen darauf an, daß nur zum Einführen des Reinigungskörpers 10 in den Raum 18 das Magazin 9 und der Wasseranschluß 14 übereinander stehen, wobei dann der Verschiebeweg etwas größer wird.

Eine weitere Änderung der erfindungsgemäßen Vorrichtung kann darin bestehen, in der Wasserzuführungsleitung zum Wasseranschluß 14 ein Schaltventil vorzusehen, das dann gesperrt wird, wenn sich das Magazin 9 über dem Wasseranschluß 14 befindet. Auf diese Weise kann der Magazinraum während des Herunterfallens des Reinigungskörpers 10 in den Raum 18 druckwasserfrei gehalten werden.

## Patentansprüche

1. Vorrichtung zum Reinigen und Entleeren von Flüssigkeitsleitungen, insbesondere Getränkeleitungen in Zapfanlagen, mit einem Schieber- oder Drehschieberventil, bei dem der Ventilschieber in einer Aussparung eines Ventilgehäuses derart beweglich ist, daß mindestens eine Querbohrung im Ventilschieber in Verbindung mit einem Anschlußstutzen für den Einlauf des Getränkes gebracht werden kann, und mit einem zylinderförmigen Magazin für elastische, kugelförmige Reinigungskörper sowie einem Anschlußstutzen für die Wasserzufuhr, **dadurch gekennzeichnet,** daß das zylinderförmige Magazin (9) für die elastischen, kugelförmigen Reinigungskörper (10) und der zu einer flexiblen Getränkeleitung (13) zum Ausschank führende Anschlußstutzen unmittelbar an der Oberseite des durch eine geeignete Antriebseinrichtung betätigbaren Ventilschiebers (3, 3') über je einer entsprechenden Durchbohrung derselben angeordnet und mit diesem verschiebbar sind, wobei der Gewindeanschluß (14) für die Reinigungswasserzufuhr und der Anschluß (4) für die Getränkezufuhr im unteren Teil des Ventilgehäuses (1) im Abstand voneinander angeordnet sind, derart, daß in der einen Endstellung des Schiebers im Betriebszustand die beiden Durchbohrungen (8, 11) zur Deckung mit den beiden Anschlußstutzen (4, 14) im unteren Teil des Ventilgehäuses (1) gebracht werden und im Reinigungs- bzw. Entleerungszustand der Anschluß (4) für die Getränkezufuhr geschlossen und die zum Ausschank führende Getränkeleitung (13) mit dem Gewindeanschluß (14) für die Reinigungswasserzufuhr verbunden ist.

2. Vorrichtung nach Anspruch 1, **dadurch gekennzeichnet,** daß der Gewindeanschluß (14) und der Anschluß (4) den gleichen Abstand voneinander wie die beiden Durchbohrungen (8, 11) im Ventilschieber (3) aufweisen.

3. Vorrichtung nach Anspruch 1, **dadurch gekennzeichnet,** daß der Gewindeanschluß (14) und der Anschluß (4) einen größeren Abstand voneinander wie die beiden Durchbohrungen (8, 11) im Ventilschieber (3) aufweisen.

4. Vorrichtung nach Anspruch 1, 2 oder 3, **dadurch gekennzeichnet,** daß im oberen Teil des Gewindeanschlußstutzens für die Reinigungswasserzufuhr ein Raum (18) zur Aufnahme eines kugelförmigen, elastischen Reinigungskörpers (10) vorgesehen ist, der vom rohrförmigen Magazin (9) bei der Stellung des Betriebszustandes in diesen Raum fällt und in der Stellung des Reinigungszustandes von der Wassersäule durch die zum Ausschank führende Getränkeleitung (13) nach dem Ausschank gedrückt wird.

5. Vorrichtung nach Anspruch 1, 2 oder 3 und 4, **dadurch gekennzeichnet,** daß die Antriebseinrichtung zur Betätigung des Ventilschiebers (3, 3') aus einem gegebenenfalls fernsteuerbaren Druckkolben (16) besteht, der von einer CO ₂ - Druckflasche aus beaufschlagt wird.

6. Vorrichtung nach Anspruch 1, 2 oder 3, 4 oder 5, **dadurch gekennzeichnet,** daß der Ventilschieber (3, 3') zur Längsbewegung im Ventilgehäuse (1) ein entsprechendes Querschnittsprofil, beispielsweise ein Schwalbenschwanzprofil oder ein T-Profil, aufweist und in einer entsprechend ausgebildeten Nut (2, 2') im Ventilgehäuse (1) gleitet.

7. Vorrichtung nach einem oder mehreren der vorhergehenden Ansprüche, **dadurch gekennzeichnet,** daß die Anschlußstutzen (4, 14) an der Unterseite des Ventilgehäuses (1) mit durch Schraubenfedern (19, 20) beaufschlagten, zylinderförmigen Aufsätzen (21, 22) zur Abdichtung gegen die untere Fläche (23) des Schiebers (3) drücken.

8. Vorrichtung nach einem oder mehreren der vorhergehenden Ansprüche, **dadurch gekennzeichnet,** daß der Anschlußstutzen (4) für die Getränkezufuhr mit einem Ansatzstück (5) zum direkten Aufsetzen auf ein Getränkefaß (6) versehen ist.

9. Vorrichtung nach Anspruch 1, 2 oder 3 und 4, **dadurch gekennzeichnet,** daß in einem halbkreisförmigen Ventilgehäuse (27, 28) ein Drehschieber (26) angeordnet ist, der über Druckkolben (32, 33) in Verbindung mit in Kanälen geführten Kugeln (24) in zwei Endstellungen gebracht werden kann, die dem Betriebszustand bzw. dem Entleerungszustand der einzelnen Anschlüsse entsprechen.

10. Vorrichtung nach Anspruch 1, 2 oder 3 bis Anspruch 7, **dadurch gekennzeichnet,** daß in der zum Anschluß (14) führenden Leitung für die Wasserzufuhr ein Schaltventil angeordnet ist.

11. Vorrichtung nach einem der Ansprüche 1, 3 oder 6, **dadurch gekennzeichnet,** daß im Ventilgehäuse (1) im Bereich der an dem Ventilschieber (3) angebrachten Anschlußstutzen (12) und des Magazins (9) eine von der den Ventilschieber (3) führenden Ausnehmung (2) ausgehende Öffnung vorgesehen ist, in welcher der Anschlußstutzen (12) und das Magazin (9) aus dem Ventilgehäuse (1) hervortreten und beide Teile (9, 12) bei der Bewegung des Ventilschiebers (3) verstellbar sind.

## Claims

1. Device for cleaning and draining conduits containing liquids, in particular beverage conduits in tapping installations, with a sliding or sliding and rotating valve, in which the valve slider is so movable in a recess in the valve housing that at least one transverse bore in the slider can be brought into communication with a connection for the entry of the beverage, and with a cylindrical magazine for elastic, ball-shaped cleaning bodies and a connection for the water supply, characterised in that the cylindrical magazine (9) for the elastic ball-shaped cleaning bodies (10) and the connection leading to a flexible beverage conduit (13) at the dispensing point is arranged directly on the upper side of the valve slider (3, 3'), activated by a suitable drive mechanism, each via a corresponding bore, and is movable with this, wherein the threaded connection (14) for the cleaning water supply and the connection (4) for the beverage supply housing (1) are arranged at a distance from one another in the lower part of the valve housing (1) such that both holes (8, 11) are brought to a position covering both connections (4, 14) in the lower part of the valve housing in one of the final positions of the slide valve, and during the cleaning or draining operation the connection (4) for the drink supply is closed and the beverage conduit (13) leading to the dispensing unit is joined to the threaded connection (14) for the cleaning water supply.

2. Device according to Claim 1, characterised in that the threaded connection (14) and the connection (4) are located at the same distance from one another as both holes (8, 11) in the valve slider (3).

3. Device according to Claim 3, characterised in that the threaded connection (14) and the connection (4) are located at a greater distance from one another than both holes (8, 11) in the valve slider (3).

4. Device according to Claim 1, 2 or 3, characterised in that in the upper part of the threaded connector for the cleaning water supply, a space (18) is provided for a ball-shaped, elastic cleaning body (10), which drops from the tubular magazine (9) into this space in the operating condition and in the cleaning condition is pressed by the water column towards the dispensing unit through the beverage conduit (13) leading to the dispensing unit.

5. Device according to Claim 1, 2 or 3 and 4, characterised in that the drive device for activating the valve slider (3, 3') consists of an optionally remotely-controlled pressure piston (16) which is operated by a flask of compressed CO₂.

6. Device according to Claim 1, 2 or 3, 4 or 5, characterised in that the valve slider (3, 3') for longitudinal movement in the valve housing (1) has a corresponding cross-sectional profile, example a dovetail profile or a T-profile, and slides in a correspondingly shaped groove (2, 2') in the valve housing (1).

7. Device according to one or several of the above claims, characterised in that the connectors (4, 14) on the lower side of the valve housing (1) press for sealing against the lower surface (23) of the sliding unit (3) with cylindrical tops (21, 22) pressed by coil springs (19, 20).

8. Device according to one or several of the above claims, characterised in that the connection (4) for the drink supply is provided with an extension piece (5) for placing directly on the drinks barrel (6).

9. Device according to Claim 1, 2 or 3 and 4, characterised in that in a semi-circular valve housing (27, 28) a rotary slider (26) is arranged which can be moved to two final positions by means of pistons (32, 33) in conjunction with balls (24) guided through channels, and that these two positions correspond to the operating condition or the draining condition of the individual connections.

10. Device according to Claim 1, 2, or 3 up to Claim 7, characterised in that an on-off valve is arranged in the conduit leading to the connection (14) for water supply.

11. Device according to one of claims 1, 3 or 6, characterised in that in the valve housing (1) in the region of the connections (12) fitted to the valve slider (3) and of the magazine (9), an opening is provided going from the recess (2) guiding the valve slider (3), in which opening the connection (12) and the magazine (9) project from the valve housing (1) and both parts (9, 12) are adjustable when the valve slider (3) is moved.

## Revendications

1. Dispositif de nettoyage et de vidange de conduits à liquide, notamment de conduits à boissons dans des installations de soutirage, comprenant une soupape à coulisse ou à tiroir rotatif dont le tiroir obturateur est mobile, dans une échancrure d'un carter de soupape, de telle sorte qu'au moins un perçage transversal ménagé dans le tiroir obturateur puisse être mis en communication avec un embout de raccordement pour l'afflux de la boisson ; un magasin cylindrique renfermant des corps de nettoyage élastiques et sphériques ; ainsi qu'un embout de raccordement pour l'arrivée d'eau, caractérisé par le fait que le magasin cylindrique (9) destiné aux corps de nettoyage (10) élastiques et sphériques, ainsi que l'embout de raccordement gagnant un conduit flexible (13) à boisson menant au système de déversement, sont directement disposés à la face supérieure du tiroir obturateur (3, 3') actionnable par l'intermédiaire d'un mécanisme d'entrainement approprié, au-dessus d'un passage correspondant respectif dudit tiroir, avec lequel ils peuvent coulisser, le raccord fileté (14) pour l'arrivée d'eau de nettoyage et le raccord (4) pour l'arrivée de la boisson étant disposés'à distance l'un de l'autre, dans la partie inférieure du carter (1) de la soupape, de telle sorte que dans l'une des positions extrêmes du tiroir, dans la condition de fonctionnement, les deux passages (8, 11) soient amenés dans l'alignement des deux embouts de raccordement (4, 14) dans la partie inférieure du carter (1) de la soupape et, dans la condition respective de nettoyage ou de vidange, le raccord (4) pour l'arrivée de la boisson soit fermé, et le conduit (13) à boisson, menant au système de déversement, soit relié au raccord fileté (14) pour l'arrivée d'eau de nettoyage.

2. Dispositif selon la revendication 1, caractérisé par le fait que le raccord fileté (14) et le raccord (4) sont mutuellement espacés de la même distance que les deux passages (8, 11) ménagés dans le tiroir obturateur (3).

3. Dispositif selon la revendication 1, caractérisé par le fait que le raccord fileté (14) et le raccord (4) sont espacés, l'un de l'autre, d'une plus grande distance que les deux passages (8, 11) ménagés dans le tiroir obturateur (3).

4. Dispositif selon la revendication 1, 2 ou 3, caractérisé par la présence, dans la partie supérieure de l'embout fileté de raccordement pour l'arrivée d'eau de nettoyage, d'un compartiment (18) destiné à recevoir un corps de nettoyage (10) sphérique et élastique qui, dans la position correspondant à la condition de fonctionnement, tombe dans ce compartiment à partir du magasin tubulaire (9) et qui, dans la position correspondant à la condition de nettoyage, est poussé par la colonne d'eau vers le système de déversement, en parcourant le conduit (13) à boisson qui mène à ce système de déversement.

5. Dispositif selon la revendication 1, 2 ou 3 et 4, caractérisé par le fait que le mécanisme d'entrainement, conçu pour l'actionnement du tiroir obturateur (3, 3'), consiste en un plongeur (16) éventuellement télécommandable et sollicité à partir d'une bouteille de CO₂ comprimé.

6. Dispositif selon la revendication 1, 2 ou 3, 4 ou 5, caractérisé par le fait que le tiroir obturateur (3, 3') présente, en vue du mouvement longitudinal dans le carter (1) de la soupape, un profil de section transversale correspondant, par exemple un profil en queue d'aronde ou un profil en T, et glisse dans une gorge (2, 2') de réalisation correspondante, pratiquée dans le carter (1) de la soupape.

7. Dispositif selon l'une ou plusieurs des revendications précédentes, caractérisé par le fait que les embouts de raccordement (4, 14) situés à la face inférieure du carter (1) de la soupape exercent une pression contre la surface inférieure (23) du tiroir (3), par des coiffes cylindriques (21, 22) soumises à l'action de ressorts hélicoïdaux (19, 20), en vue d'assurer l'étanchéité.

8. Dispositif selon l'une ou plusieurs des revendications précédentes, caractérisé par le fait que l'embout de raccordement (4) pour l'arrivée de la boisson est muni d'une pièce rapportée (5), en vue de l'enfilement direct sur un fût (6) à boisson.

9. Dispositif selon la revendication 1, 2 ou 3 et 4, caractérisé par le fait qu'un carter semi-circulaire (27, 28) de la soupape renferme un tiroir rotatif (26) pouvant être mis en liaison, par l'intermédiaire de plongeurs (32, 33), avec des billes (34) guidées dans des canaux, dans deux positions extrêmes correspondant, respectivement, à la condition de fonctionnement et à la condition de vidange des raccords individuels.

10. Dispositif selon la revendication 1, 2 ou 3 à 7, caractérisé par le fait que le conduit d'arrivée d'eau, gagnant le raccord (14), renferme une valve de commutation.

11. Dispositif selon l'une des revendications 1, 3 ou 6, caractérisé par la présence dans le carter (1) de la soupape, au voisinage du magasin (9) et des embouts de raccordement (12) ménagés sur le tiroir obturateur (3), d'un orifice qui part de l'évidement (2) guidant le tiroir obturateur (3), orifice dans lequel l'embout de raccordement (12) et le magasin (9) dépassent au-delà du carter (1) de la soupape, et ces deux pièces (9, 12) peuvent être déplacées lors du mouvement du tiroir obturateur (3).
